# EUROPÄISCHE PATENTANMELDUNG

(11) **EP 3 988 229 A1**
(43) Veröffentlichungstag der Anmeldung: **27.04.2022**
(21) Anmeldenummer: 20203904.6
(22) Anmeldetag: 26.10.2020
(51) Int. Cl.: B22F 3/24, B33Y 70/00, C22C 33/02, C22C 38/08, C22C 38/10, C22C 38/12, C22C 38/14, C21D 6/00, C21D 6/02, C22C 38/02, C22C 38/04, C22C 38/06, C22C 38/16

(54) **PULVER FÜR DIE VERWENDUNG IN EINEM PULVERMETALLURGISCHEN ODER ADDITIVEN VERFAHREN, STAHLWERKSTOFF UND VERFAHREN ZUR HERSTELLUNG EINES BAUTEILS**

(71) Anmelder: Deutsche Edelstahlwerke Specialty Steel GmbH & Co. KG, 58452 Witten (DE)
(72) Erfinder: HILL, Horst, Dr., 47929 Grefrath (DE); KLUGE, Philipp, 47229 Duisburg (DE); MAES, Oliver, 47839 Krefeld (DE)
(74) Vertreter: Cohausz & Florack

(57) **Zusammenfassung**

Die Erfindung stellt ein Pulver für die Verwendung in einem pulvermetallurgischen oder einem additiven Verfahren, das die Erzeugung eines hinsichtlich seiner Härte und Verschleißbeständigkeit optimierten Stahlwerkstoffs ermöglicht, einen entsprechend beschaffenen Stahlwerkstoff und ein Verfahren zur Verfügung mit dem sich zuverlässig Bauteile erzeugen lassen, deren Härte und Verschleißbeständigkeit höchste Anforderungen erfüllen. Ein erfindungsgemäßes Pulver enthält dazu Stahlpartikel eines Stahls, der, in Masse-%, aus C: < 0,5 %, Si: < 2,0 %, Mn: < 2,0 %, Cr: < 1,0 %, Mo: 0,25 - 12 %, Ni: 8 - 30 %, optional Co: 8 - 18 %, optional Cu: 0,5 - 5,0 %, Nb: 0,05 - 5,0 %, optional Al: ≤ 9,75 %, optional Ti: ≤ 9,75 %, mit der Maßgabe, dass die Summe der Gehalte an Nb und, soweit vorhanden, an Al und Ti 0,15 % bis 10 % beträgt, und als Rest aus Eisen und unvermeidbaren Verunreinigungen zusammengesetzt ist, zu denen < 0,05 % P, < 0,05 % S, < 0,1 % N, < 0,05 % B und < 0,5 % O sowie im Fall, dass Co nicht in Gehalten von mindestens 8 % vorhanden ist, < 0,5 % Co und im Fall, dass Cu nicht in Gehalten von mindestens 0,5 % vorhanden ist, < 0,5 % Cu zählen, sowie optional zusätzlich Partikel mindestens eines als Karbid, Nitrid, Carbonitrid, Borid oder Oxid vorliegenden Hartstoffs gebildet ist, die mit den Stahlpartikeln vermischt sind und 5 - 50 Vol.-% am Gesamtvolumen des Pulvers einnehmen. Ein aus einem solchen Pulver erzeugter Stahlwerkstoff weist im ausscheidungsgehärteten Zustand eine Härte von mindestens 40 HRC auf, lässt sich aber im lösungsgeglühten Zustand gut verarbeiten.

## Beschreibung

Die Erfindung betrifft ein Pulver, das für die Verwendung in einem pulvermetallurgischen oder einem additiven Verfahren vorgesehen ist, einen Stahlwerkstoff, der aus einem solchen erfindungsgemäßen Pulver hergestellt ist, und ein Verfahren zur Herstellung eines Bauteils, das aus einem erfindungsgemäßen Stahlwerkstoff besteht und eine Gesamthärte von mindestens 40 HRC aufweist.

Wenn nachfolgend "%"-Angaben zu Stahlzusammensetzungen gemacht werden, so beziehen diese sich jeweils auf die Masse (Angabe in "Masse-"), soweit nicht ausdrücklich etwas anderes genannt ist.

Die Anteile bestimmter Bestandteile am Gefüge eines Stahlwerkstoffs oder eines Stahlbauteils sind im vorliegenden Text in Volumen-% ("Vol.-%") angegeben, soweit nicht ausdrücklich etwas anderes vermerkt ist.

Genauso sind die Anteile, die die verschiedenen Partikel am Gesamtvolumen des erfindungsgemäßen Pulvers einnehmen, jeweils in Vol.-% angegeben, soweit nichts anderes ausdrücklich vermerkt ist.

Die hier in HRC angegebenen Härtewerte sind das Ergebnis einer Härteprüfung nach Rockwell, die gemäß DIN EN ISO 6508-1: 2016-12 durchgeführt worden ist.

Zu den hochfesten martensitisch aushärtbaren Legierungen, in der Fachsprache auch "Maraging-Stähle" ("martensitic-aging") genannt, zählen beispielsweise die unter den DIN-Werkstoffnummern 1.2709 (< 0,03 % C, < 0,25 % Cr, < 0,15% Mn, ≤ 0,1 % P, ≤ 0,1 % S, ≤ 0,05 % Si, 0,8 - 1,20 % Ti, 4,5 - 5,2 % Mo, 17,0 - 19,0 % Ni, Rest Fe und technisch unvermeidbare Verunreinigungen), 1.6355 (≤ 0,03 C, ≤ 0,1 % Mn, ≤ 0,1 % Si, ≤ 0,01 % P, ≤ 0,01 % S, 17 - 19 % Ni, 4,8 - 5,5 % Mo, 0,05 - 0,15 % AI, 0,75 - 1,10 % Ti, 11,0 - 13,0 % Co, Rest Fe und unvermeidbare Verunreinigungen) oder 1.6356 (≤ 0,03 C, ≤ 0,1 % Mn, ≤ 0,1 % Si, ≤ 0,01 % P, ≤ 0,01 % S, 17 - 18,5 % Ni, 3 - 4,5 % Mo, ≤ 0,20 % AI, 1,5 - 2,0 % Ti, 11,5 - 13,5 % Co, Rest Fe und unvermeidbare Verunreinigungen) genormten Stähle.

Solche Stähle erreichen ihre mechanischen Eigenschaften auf Basis einer martensitischen Umwandlung (ohne Zwangslösung von C -> C-freier Nickel- bzw. Weichmartensit) und einer anschließenden Ausscheidungshärtung. Die dabei entstehenden Ausscheidungen und intermetallischen Phasen bewirken die Härtesteigerung. Aufgrund des minimierten C-Gehalts entstehen Karbide nur in einem entsprechend minimiertem Umfang. So erreichen Maraging-Stähle typischerweise Zugfestigkeiten von bis zu 2400 N/mm² bei vergleichsweise hoher Zähigkeit und Härte von bis zu 55 HRC. Als Anwendungsbeispiele können Press-, Präge- oder Druckgießwerkzeuge genannt werden. Außerdem sind hochbeanspruchte Bauteile aus dem Bereich Luftfahrt und Fahrzeugtechnik zu nennen.

Im Zusammenhang mit hartphasenverstärkten Werkstoffen, so genannten Metal Matrix Composites (MMC) oder Cermets, gibt es ein ebenso breites Spektrum an Werkstoffen. Charakteristisch für diese Werkstoffklasse ist die Herstellung eines Verbundes aus einer Metallmatrix, auch "Bindephase" und einer Hartphase, die auch als "Verstärkungsphase" bezeichnet wird und aus Karbid-, Nitrid-, Karbonitrid-, Borid- oder Oxidpartikeln gebildet ist, die dem Metallwerkstoff, der die Metallmatrix bildet, zusätzlich zugegeben sind und als solche zusätzlich zu den Ausscheidungen in die Metallmatrix eingebettet sind, die sich in der Matrix des Metallwerkstoffs bilden. Die Grundlagen für MMC-Werkstoffe bilden dabei Pulver, die aus Stahlpartikeln und zusätzlichen Hartphasenpartikeln gemischt sind.

MMC-Werkstoffe auf Stahlbasis finden insbesondere Anwendung, wenn eine hohe Härte und Verschleißbeständigkeit gefordert ist. Anwendungsbeispiele sind Matrizen für die Metallverarbeitung, Press- und Schneidwerkezuge oder auch Werkzeuge zur Kunststofferzeugung oder -verarbeitung. Typische mit MMC-Werkstoffen erreichbare Härten liegen dabei im Bereich von 50 bis 70 HRC.

Pulver der hier in Rede stehenden Art, insbesondere solche, bei denen zur Optimierung der mechanischen Belastbarkeit des aus ihnen erzeugten Bauteils Stahlpartikel mit Hartstoffpartikeln vermischt sind, lassen sich pulvermetallurgisch zu Halbzeugen oder fertigen Bauteilen verarbeiten. Bei der pulvermetallurgischen Herstellung wird das jeweilige Pulver in einem Werkzeug durch Verdichtung in eine Form gebracht und anschließend durch Wärmezufuhr gesintert, so dass das erhaltene Bauteil eine kompakte, dauerhaft feste Form erhält (s. https://www.chemie.de/lexikon/Pulvermetallurgie.html, Auffindedatum 27.08.2020).

Die Herstellung von aus Stahlpartikeln bestehenden Pulvern kann in bekannter Weise durch Verdüsen oder durch eine mechanische Zerkleinerung, wie Nassmahlen, erfolgen. Ebenso ist in an sich ebenfalls bekannter Weise ein mechanisches Legieren von Elementarpulvern möglich, die in den hierzu notwendigen Korngrößen bereitgestellt und in der erfindungsgemäßen Legierungsvorschrift entsprechenden Mengen miteinander vermischt werden.

Insbesondere dann, wenn im Pulver keine Hartstoffpartikel vorgesehen sind, das Pulver also nur aus Stahlpartikeln besteht, lassen sich Pulver der hier vorgestellten Art auch durch "additive Fertigungsverfahren" verarbeiten. Unter dem Begriff "additive Fertigungsverfahren" werden dabei alle Herstellverfahren zusammengefasst, bei denen ein Werkstoff zur Erzeugung eines Bauteils hinzugefügt wird. Dieses Hinzufügen erfolgt in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen.

Das additive Fertigungsprinzip ermöglicht es, geometrisch komplexe Strukturen herzustellen, die mit konventionellen Fertigungsverfahren, wie den schon genannten spanabhebenden Verfahren oder Ur- und Umformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

Vor dem Hintergrund des voranstehend erläuterten Standes der Technik bestand die Aufgabe der Erfindung darin, ein Pulver, das die Erzeugung eines hinsichtlich seiner Härte und Verschleißbeständigkeit optimierten Stahlwerkstoffs ermöglicht, sowie einen entsprechend beschaffenen Stahlwerkstoff für Bauteile von optimierter Härte und Verschleißbeständigkeit anzugeben.

Darüber hinaus sollte ein Verfahren angegeben werden, mit dem sich zuverlässig Bauteile erzeugen lassen, deren Härte und Verschleißbeständigkeit höchste Anforderungen erfüllen.

Die Erfindung hat diese Aufgabe durch das in Anspruch 1 angegebene Pulver, den in Anspruch 10 angegebenen Stahlwerkstoff und das in Anspruch 15 angegebene Verfahren gelöst.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Pulver für die Verarbeitung in einem pulvermetallurgischen oder einem additiven Verfahren, wobei das Pulver
- aus Stahlpartikeln eines Stahls, der, in Masse-%, aus

| | | | | |
|---|---|---|---|---|
| | C: | | < | 0,5 %, |
| | Si: | | < | 2,0 %, |
| | Mn: | | < | 2,0 %, |
| | Cr: | | < | 1,0 %, |
| | Mo: | 0,25 | - | 12 %, |
| | Ni: | 8 | - | 30 %, |
| optional | Co: | 8 | - | 18 %, |
| optional | Cu: | 0,5 | - | 5,0 % |
| | Nb: | 0,05 | - | 5,0 %, |
| optional | Al: | | ≤ | 9,75 %, |
| optional | Ti: | | ≤ | 9,75 %, |

| | | | | |
|---|---|---|---|---|
| mit der Maßgabe, dass die Summe der Gehalte an Nb und, soweit vorhanden, an Al und Ti 0,15 - 10 % beträgt, und als Rest aus Eisen und unvermeidbaren Verunreinigungen zusammengesetzt ist, zu denen < 0,05 % P, < 0,05 % S, < 0,1 % N, < 0,05 % B und < 0,1 % O sowie im Fall, dass Co nicht in Gehalten von mindestens 8 % vorhanden ist, < 0,5 % Co und im Fall, dass Cu nicht in Gehalten von mindestens 0,5 % vorhanden ist, < 0,5 % Cu zählen, | | | | |

sowie
- optional zusätzlich aus Partikeln mindestens eines als Karbid, Nitrid, Carbonitrid, Borid oder Oxid vorliegenden Hartstoffs gebildet ist, die mit den Stahlpartikeln vermischt sind und 5 - 50 Vol.-% am Gesamtvolumen des Pulvers einnehmen.

In entsprechender Weise ist ein erfindungsgemäßer Stahlwerkstoff bzw. ein erfindungsgemäßes Bauteil hergestellt aus einem erfindungsgemäßen Pulver, so dass der Stahl eines erfindungsgemäßen Stahlwerkstoffs bzw. eines erfindungsgemäßen Bauteils eine Zusammensetzung besitzt, die gemäß der für das Pulver erfindungsgemäß vorgegebenen Legierungsvorschrift legiert ist.

Dabei können, ebenso entsprechend der Zusammensetzung eines erfindungsgemäßen Pulvers, als Option in den Stahlwerkstoff Hartstoffpartikel eingebettet sein, die als Karbide, Nitride, Carbonitride, Boride oder Oxide vorliegen können und im Stahlwerkstoff zusätzlich zu den aus den Legierungselementen des Stahls der Stahlmatrix gebildeten intermetallischen Ausscheidungen vorhanden sind.

Karbide, Nitride oder Carbonitride liegen in der Stahlmatrix des Werkstoffs allenfalls in geringen Mengen vor, da der erfindungsgemäß legierte Stahl der Stahlmatrix nur so wenig Kohlenstoff und so geringe Gehalte an Stickstoff aufweist, dass sich durch Ausscheidungsvorgänge keine Karbid- oder Nitridausscheidungen in einem Umfang bilden können, der einen wesentlichen Einfluss auf die Eigenschaften des Stahlwerkstoffs haben könnte. Sofern ein erfindungsgemäßer Stahlwerkstoff zusätzlich dem Pulver, aus dem er erzeugt ist, zugegebene Hartstoffpartikel aufweist, ist dies somit jedenfalls stets daran zu erkennen, dass der optional vorhandene Gehalt an Hartstoffpartikeln wesentlich größer ist als der Gehalt an denjenigen Hartstoffausscheidungen, die sich aus dem Stahl der Stahlmatrix ("Bindephase") des Stahlwerkstoffs selbst gebildet haben. Der Anteil der in einem erfindungsgemäßen Stahlwerkstoff optional vorhandenen Hartstoffpartikel am Gesamtvolumen des Stahlwerkstoffs beträgt hierbei 5 Vol.-% bis 50 Vol.-%.

Die Legierungselemente des Stahls des erfindungsgemäßen Pulvers oder des erfindungsgemäßen Stahlwerkstoffs gliedern sich in die Hauptlegierungselemente, zu denen C, Si, Mn, Cr, Mo, Ni und jeweils optional Co sowie Cu gehören, die Ausscheidungshärter, zu denen Nb als erfindungsgemäß vorgesehener Pflichtbestandteil und die optional zusätzlich zugegebenen Legierungselemente Ti und/oder Al gehören, sowie die Verunreinigungen, zu denen P, S, N, B und O sowie, falls es nicht gezielt in Gehalten von mindestens 8 Masse-% zugegeben wird, Co und, sofern es nicht in Gehalten von mindestens 0,5 Masse-% zugegeben ist, Cu gehören. Diese Verunreinigungen sind unerwünscht. Ihre Gehalte werden daher bei der Stahlerzeugung auf einem technisch unwirksamen Niveau gehalten. Ihre Anwesenheit ist in der Praxis jedoch unvermeidbar, da die Verunreinigungen im Zuge der Stahlerzeugung in den Stahl gelangen oder nur unvollständig aus dem Stahl entfernt werden können.

Ein erfindungsgemäß legierter Stahl des Stahlpulvers und dementsprechend des daraus erzeugten Stahlwerkstoffs bildet in der für Maraging-Stähle typischen Weise aufgrund seiner minimierten C-Gehalte allenfalls in geringem Umfang Karbide, die dementsprechend allenfalls minimal zur Härte des Stahlwerkstoffs beitragen können. Stattdessen entstehen durch eine geeignete Auslagerungsbehandlung in dem Stahl Ausscheidungen und/oder intermetallische Phasen. Diese tragen entscheidend zur Härte des Stahlwerkstoffs und entsprechend zur Härte eines aus einem erfindungsgemäßen Stahlwerkstoff bestehenden Bauteils bei.

Gesteigert werden kann die Härte durch die erfindungsgemäß optional vorgesehene Zugabe von zusätzlichen Hartstoffpartikeln, die einem erfindungsgemäßen Pulver zugegeben werden und sich dementsprechend in einem erfindungsgemäßen Stahlwerkstoff wiederfinden. Bei einem erfindungsgemäßen Stahlwerkstoff und entsprechend bei einem daraus bestehenden Bauteil, in dem auf diese Weise zusätzlich zugegebene Hartstoffpartikel vorhanden sind, stellt der erfindungsgemäß legierte, bereits eine hohe eigene Härte ausbildende Stahl eine Stahlmatrix dar, in der die Hartstoffpartikel eingebettet sind.

Kohlenstoff ("C") ist im Stahl eines erfindungsgemäßen Pulvers oder der Stahlmatrix eines erfindungsgemäßen Stahlwerkstoffs allenfalls in Gehalten von weniger als 0,5 Gew.-% zugelassen, weil C in weichmartensitischen Werkstoffen, zu denen der erfindungsgemäß eingesetzte Stahl gehört, prinzipiell ein unerwünschtes Legierungselement ist. Die martensitische Härtung erfolgt bei diesen Stählen ohne die Beteiligung von Kohlenstoff, woraus eine niedrige Lösungsglühhärte resultiert. Dies wiederum hat den Vorteil, dass aus erfindungsgemäßem Stahlwerkstoff bestehende Halbzeuge im lösungsgeglühten Zustand optimal zu einem Bauteil verarbeiten lassen. Die Steigerung der Härte auf das gewünschte Endniveau erfolgt dann durch eine nachgelagerte verzugsarme Ausscheidungshärtung. Der C-Gehalt ist bei einem erfindungsgemäß legierten Stahl auch deshalb reduziert, weil, wie schon erwähnt, die Bildung von Karbiden vermieden werden soll. Karbide würden die Zähigkeit reduzieren und ausscheidungsbildende Legierungselemente, wie beispielsweise Titan oder Niob, binden, so dass diese nicht mehr für die Ausscheidungshärtung zur Verfügung stehen würden.

Um diese unerwünschten Effekte sicher zu vermeiden, kann der C-Gehalt des Stahls auf weniger als 0,3 Masse-%, insbesondere weniger als 0,2 Masse-%, beschränkt werden. Optimalerweise ist der C-Gehalt auf geringstmögliche Gehalte reduziert, so dass C-Gehalte, die im technischen Sinne "0" sind, also C-Gehalte, die im erfindungsgemäßen Stahl keine Wirkung mehr haben, wie beispielsweise C-Gehalte von weniger als 0,1 Masse-%, insbesondere weniger als 0,05 Masse-% oder weniger als 0,01 Masse-%, besonders günstig sind.

Durch die Anwesenheit von Silizium ("Si") kann der Schmelzpunkt des Stahls abgesenkt und die Viskosität der Schmelze reduziert werden. Dies kann sich als vorteilhaft erweisen, wenn die Stahlschmelze durch Verdüsen zu den Stahlpartikeln eines erfindungsgemäß bereitgestellten Pulvers zerstäubt werden soll. Si in höheren Gehalten würde jedoch die Anwesenheit von unerwünschtem Ferrit im Gefüge des Stahls stabilisieren. Daher ist der Si-Gehalt auf weniger als 2,0 Masse-%, insbesondere weniger als 1,0 Masse-%, beschränkt, wobei sich Si-Gehalte von weniger als 0,6 Masse-% als besonders günstig erweisen. Die positive Wirkung von Si lässt sich insbesondere beim Verdüsen einer erfindungsgemäß legierten Schmelze zu einem erfindungsgemäßen Stahlpulver betriebssicher nutzen, wenn der Si-Gehalt des Stahls mindestens 0,05 Masse-%, insbesondere mindestens 0,1 Masse-% oder mindestens 0,2 Masse-% beträgt.

Wie Si bewirkt auch die Anwesenheit von Mangan ("Mn") eine Absenkung des Schmelzpunkts des Stahls und damit eine Reduzierung der Viskosität der Schmelze, welche sich positiv auf die Verdüsbarkeit einer erfindungsgemäß zusammengesetzten Stahlschmelze auswirkt. Gleichzeitig kann durch die Anwesenheit von Mn der Austenitgehalt im Gefüge des Stahls stabilisiert werden, weswegen es zur Begrenzung des im Gefüge sich bildenden von δ-Ferrits eingesetzt werden kann. Zu hohe Mn-Gehalte könnten allerdings bewirken, dass in den Stahlpartikeln eines erfindungsgemäßen Pulvers oder in der Stahlmatrix eines erfindungsgemäßen Werkstoffs Restaustenit-Anteile erhalten bleiben. Diese würden wie Ferrit die Härte und Verschleißbeständigkeit beeinträchtigen. Um diesen Effekt zu vermeiden, ist der Mn-Gehalt erfindungsgemäß auf weniger als 2,0 Masse-%, insbesondere weniger als 1,0 Masse-%, beschränkt, wobei sich Mn-Gehalte von weniger als 0,6 Masse-% als besonders günstig erweisen. Soll die positive Wirkung von Mn bei der Erzeugung von erfindungsgemäß legierten Stahlpulver-Partikeln durch Verdüsen genutzt werden, so sollten hierzu Mn-Gehalte von mindestens 0,05 Masse-%, insbesondere mindestens 0,1 Masse-% oder mindestens 0,2 Masse-%, vorgesehen werden.

Chrom ("Cr") ist im Stahl der Stahlpartikel eines erfindungsgemäßen Pulvers oder in der Stahlmatrix eines erfindungsgemäßen Stahlwerkstoffs in Gehalten von weniger als 1,0 Masse-% zugelassen, ohne dass eine spezielle legierungstechnische Wirkung von Cr genutzt wird. So kann auf eine gezielte Zugabe dieses Legierungselements auch ganz verzichtet werden, weil die Korrosionsbeständigkeit bei einem erfindungsgemäßen Stahlwerkstoff nicht im Mittelpunkt steht. Cr kann daher im erfindungsgemäßen Stahl auch als Verunreinigung betrachtet werden, die allenfalls in technisch unwirksamen Gehalten von beispielsweise weniger als 0,5 Masse-%, insbesondere weniger als 0,1 Masse-%, vorhanden ist.

Molybdän ("Mo") beteiligt sich in der Stahlmatrix eines erfindungsgemäßen Stahlwerkstoffs neben Ti, AI, Nb und Cu an der Ausscheidungshärtung. Zum einen werden beim Ausscheidungshärten intermetallische Phasen vom Typ Fe2Mo gebildet. Zum anderen wird Mo beispielsweise in Ni3Ti-Ausscheidungen angereichert, wodurch der Effekt der Ausscheidungshärtung verstärkt wird.

Um die positiven Effekte von Mo im Stahl der Stahlpartikel eines erfindungsgemäßen Pulvers nutzen zu können, sind mindestens 0,25 Masse-% nötig. Dieser Mindestgehalt ermöglicht insbesondere dann, wenn keine Hartstoffe dem Pulver zugemischt werden, schon eine ausreichende Ausscheidungshärtung. Bei Mo-Gehalten von mindestens 1 Masse-%, insbesondere mindestens 2 Masse-% oder mindestens 4 Masse-%, tritt die günstige Wirkung von Mo besonders sicher ein.

Aufgrund der stark ferritstabilisierenden Wirkung sind Mo-Gehalte von mehr als 12,0 Masse-% zu vermeiden.

Eine Obergrenze des Mo-Gehalts von höchstens 8,0 Masse-%, insbesondere höchstens 7,0 Masse-% oder höchstens 6 Masse-%, hat sich insbesondere dann bewährt, wenn dem erfindungsgemäßen Pulver keine oder allenfalls nur solche Hartstoffe zugemischt werden, die keine Bindung mit dem in der Stahlmatrix des aus dem Pulver erzeugten Stahlwerkstoffs eingehen.

Sofern dagegen dem erfindungsgemäßen Pulver Hartstoffe zugegeben werden sollen, die eine Bindung mit Mo eingehen, wie z.B. Titankarbid, kann es sinnvoll sein, höhere Mo-Gehalte vorzusehen. Durch die erhöhten Mo-Gehalte wird der Verlust an Mo in der Stahlmatrix ("Bindephase") ausgeglichen, der bei erfindungsgemäßen Pulvern, die gesondert zugegebene und eine Bindung mit Mo eingehende Hartstoffpartikel umfassen, dadurch eintritt, dass im Zuge der Verarbeitung solcher Pulver Molybdän aus der Bindephase in die Hartstoffpartikel diffundiert. Durch erhöhte Mo-Gehalte kann trotz der Zugabe der eine Verbindung mit Mo eingehenden Hartstoffe sicher gewährleistet werden, dass bei der Erzeugung eines erfindungsgemäßen Stahlwerkstoffs bzw. eines aus erfindungsgemäßem Pulver hergestellten Bauteils in der aus den Stahlpartikeln des erfindungsgemäßen Pulvers gebildeten Stahlmatrix ("Bindephase") genügend freies Mo für die aus der Stahlmatrix heraus erfolgende Bildung einer ausreichenden Menge an Mo-Ausscheidungen zur Verfügung steht.

Zur Einstellung des Mo-Gehalts der Stahlpartikel eines erfindungsgemäßen Pulvers, dem zur Steigerung der Härte Hartstoffpartikel, welche eine Bindung mit Mo eingehen, zugegeben werden sollen, kann als praxisgerechte Regel herangezogen werden, dass der Mo-Gehalt pro Masse-% an dem Pulver zugegebenen Hartstoffpartikeln um mindestens 0,05 Masse-% erhöht werden sollte. D.h., im Fall, dass das Pulver 10 Masse-% zusätzlich zugegebene Hartstoffpartikel, wie beispielsweise TiC-Partikel, umfassen soll, sollte der Mo-Gehalt um mindestens 0,5 Masse-% gegenüber dem Gehalt an Mo erhöht sein, der zur Bildung einer gewünschten Menge an Mo-Ausscheidungen in der Bindephase benötigt wird. Genauso sollte im Fall, dass das Pulver 20 Masse-% zusätzlich zugegebener Hartstoffpartikel umfassen soll, der Mo-Gehalt um mindestens 1 Masse-% gegenüber dem Gehalt an Mo erhöht sein, der für die gewünschte Bildung an Mo-Ausscheidungen in der Bindephase benötigt wird, und im Fall, dass das Pulver zusätzlich zu den Stahlpartikeln 30 Masse-% Hartstoffphasen umfassen soll, der Mo-Gehalt um mindestens 1,5 Masse-% gegenüber dem Mo-Gehalt erhöht sein, der für die gewünschte Bildung an Mo-Ausscheidungen in der Bindephase benötigt wird. Bilden sich beispielsweise bei einem erfindungsgemäßen Pulver, das keine Hartstoffpartikel umfasst, bei einem Mo-Gehalt von 5 Masse-% im Zuge der erfindungsgemäßen Verarbeitung zu einem Bauteil für die jeweils geforderte Härte und Festigkeit ausreichende Mengen an Mo-Ausscheidungen, so sollte somit im Fall, dass das Pulver neben den Stahlpartikeln auch 20 Masse-% Hartstoffpartikel umfassen soll, um die Härte und Festigkeit weiter zu steigern, der Stahl der Stahlpartikel einen Mo-Gehalt von mindestens 6 Masse-% aufweisen, um in der Stahlmatrix des aus einem derart aus Stahl- und Hartstoffpartikeln gemischten Pulver erzeugten Bauteils sicher mindestens dieselbe Menge an Mo-Ausscheidungen zu erhalten wie bei einem Bauteil, das aus dem ausschließlich aus Stahlpartikeln mit einem Mo-Gehalt von 5 Masse-% bestehenden Pulver erzeugt worden ist.

In der Praxis erweisen sich im Fall, dass bei einem erfindungsgemäßen Pulver Stahl- und Hartstoffpartikel vorhanden sind, Mo-Gehalte von mindestens 6 Masse-%, insbesondere mindestens 8 Masse-%, als besonders zweckmäßig, wobei insbesondere hier die erfindungsgemäß durch die Anwesenheit von Mo erzielten Effekte bei Gehalten von bis zu 12 Masse-% besonders wirksam sind.

Im Fall, dass dem erfindungsgemäßen Pulver keine oder nur solche Hartstoffe zugegeben werden, die Mo nicht oder nur im geringen Umfang binden, lässt sich die Anwesenheit von Mo bei Gehalten von bis zu 7 Masse-%, insbesondere bis zu 6 Masse-% oder bis weniger als 6 Masse-%, insbesondere höchstens 5,50 Masse-% oder höchstens 5,0 Masse-%, besonders effektiv nutzen. Bei erfindungsgemäßen Pulvern, die im technischen Sinne frei von Hartstoffen sind, haben sich Mo-Gehalte von 4 Masse-% bis 6 Masse-%, insbesondere 4 Masse-% bis weniger 6 Masse-% oder 4 Masse-% bis 5,50 Masse-%, als besonders zweckmäßig erwiesen.

Nickel ("Ni") hat im Stahl der Stahlpartikel eines erfindungsgemäßen Pulvers oder in der Stahlmatrix eines erfindungsgemäßen Stahlwerkstoffs zwei Aufgaben: Zum einen bewirkt Ni die Bildung des angestrebten weichmartensitischen Gefüges. In Folge der Anwesenheit von Ni wird nach dem Lösungsglühen eines aus erfindungsgemäßem Stahlwerkstoff erzeugten Bauteils die austenitische Phase beim von der Lösungsglühtemperatur ausgehenden Abschrecken stabilisiert, so dass es zur diffusionslosen Gitterumklappung vom Austenit ("γ") nach Ferrit ("α") kommt. Da wirksame Gehalte an C fehlen, bleibt hierbei die tetragonale Gitterverzerrung aus, weswegen die Härte im lösungsgeglühten Zustand niedrig bleibt und eine weich-martensitische Gefügestruktur erhalten wird. Zum anderen bildet Ni mit Elementen wie Ti, Al und Nb intermetallische Phasen, wie beispielsweise Phasen vom Typ Ni3Ti und Ni3Al, die beim Ausscheidungshärten zur Härtesteigerung beitragen. Der jeweils benötigte Gehalt an Ni ist dabei stark abhängig von den gewählten Ausscheidungsbildnern Nb, Ti, AI und deren Gehalten. Sind hohe Gehalte an den Ausscheidungsbildnern zulegiert, wird entsprechend viel Ni abgebunden, so dass bei einer höheren Summe der Gehalte an Nb, Ti, Al auch höhere Gehalte an Ni vorgesehen werden sollten.

Damit Ni seine Aufgaben sicher erfüllen kann, sind mindestens 8,0 Masse-% notwendig, wobei Ni-Gehalte von mindestens 12 Masse-%, insbesondere mindestens 14 Masse-% oder mindestens 15 Masse-%, sich als besonders günstig erwiesen haben. Ni-Gehalte von mehr als 30,0 Masse-% bewirken keine weitere Steigerung der Effekte bzw. Eigenschaften eines erfindungsgemäßen Stahlwerkstoffs oder eines daraus bestehenden Bauteils. Bei Ni-Gehalten von bis zu 22 Masse-%, insbesondere bis zu 20 Masse-% oder höchstens 19 Masse-%, lassen sich die vorteilhaften Wirkungen der Anwesenheit von Ni besonders effektiv nutzen. Eine besonders praxisgerechte Ausgestaltung der Erfindung sieht daher Ni-Gehalte von 16 - 30 Masse-%, insbesondere 16 - 20 Masse-%, vor.

Optional kann Kobalt ("Co") im Stahl der Stahlpartikel eines erfindungsgemäßen Pulvers oder in der Stahlmatrix eines erfindungsgemäßen Stahlwerkstoffs vorhanden sein, um die Martensit-Start-Temperatur zu erhöhen. Diese lässt sich durch die Zugabe von Co vorteilhafterweise so anpassen, dass bei Raumtemperatur bereits ein vollständig martensitisches Gefüge vorliegt. Darüber hinaus reduziert Co die Löslichkeit von Mo in der Metallmatrix, was zur verstärkten Bildung von intermetallischen Phasen führt. Somit hat Kobalt auch einen indirekten Einfluss auf die Ausscheidungshärtung. Sollen diese Effekte genutzt werden, so sind dazu mindestens 8,0 Masse-% Co erforderlich, wobei sich Co-Gehalte von mindestens 8,5 Masse-%, insbesondere mindestens 9,0 Masse-%, in dieser Hinsicht als besonders günstig herausgestellt haben. Gehalte von mehr als 18,0 Masse-% führen jedoch zu keiner Steigerung des positiven Einflusses von Co. Bei Gehalten von höchstens 16,0 Masse-%, insbesondere höchstens 15 Masse-%, lassen sich die Vorteile der Anwesenheit von Co besonders vorteilhaft nutzen. Auf die Zugabe von Co kann jedoch auch verzichtet werden, wenn eine Co-freie Variante des erfindungsgemäßen Stahlwerkstoffs verlangt wird. Die Härtesteigerung durch Ausscheidungsbildung wird in diesem Fall durch die Anpassung der Gehalte der anderen härtesteigernden Legierungselemente im Rahmen der hier gegebenen Hinweise bewirkt.

Niob ("Nb"), Titan ("Ti") und Aluminium ("Al") haben neben Mo einen sehr ausgeprägten Effekt auf die Ausscheidungshärtung des erfindungsgemäßen Stahlwerkstoffs. Aus diesen Elementen werden intermetallische Phasen vom Typ Ni3Ti, Ni3Al, NiAl, Ni3Nb etc. gebildet, die die Härte steigern. Das Härteniveau kann dabei durch Variation der Legierungsgehalte im weiten Rahmen angepasst werden.

Hierbei hat sich überraschend gezeigt, dass Nb in Gehalten von mindestens 0,05 Masse-% besonders wirksam zur Steigerung der Härte und der Verschleißbeständigkeit eines erfindungsgemäßen Stahlwerkstoffs bzw. des aus einem solchen Stahlwerkstoff erzeugten, lösungsgeglühten und ausscheidungsgehärteten Bauteils beiträgt. Liegt Nb alleine vor, so sind hierzu mindestens 0,15 Masse-% Nb erforderlich, wobei sich Gehalte von mindestens 0,25 Masse-%, insbesondere mindestens 0,5 Masse-% oder mindestens 0,6 Masse-%, wie beispielsweise mindestens 1,0 Masse-%, als besonders vorteilhaft herausgestellt haben.

Die ausscheidungshärtende Wirkung von Nb kann erforderlichenfalls unterstützt werden durch die optionale Zugabe von Ti und / oder AI in Gehalten von jeweils bis zu 9,75 Masse-%. Diese Legierungselemente erweisen sich, sofern zugegeben, bereits als wirksam bei Gehalten von jeweils mindestens 0,05 Masse-%, insbesondere jeweils mindestens 0,15 Masse-% oder jeweils mindestens 0,25 Masse-%, wobei, im Fall ihrer Anwesenheit, diese Mindestgehalte für jedes der ausscheidungshärtenden Elemente einzeln gelten.

Dabei können Ti und AI optional jeweils alleine oder gemeinsam in Kombination mit dem Pflichtbestandteil Nb vorhanden sein. Um die Sicherheit, mit der sich die Effekte dieser Elemente nutzen lassen, zu erhöhen, kann wahlweise für Nb und Ti und/oder AI ein Mindestgehalt von 0,4 Masse-%, insbesondere von mehr als 0,5 Masse-% oder von mindestens 0,6 Masse-%, vorgesehen sein. So ist es beispielsweise denkbar, einen Ti-Gehalt von mindestens von 0,25 Masse-% mit einem Nb-Gehalt von mindestens 0,4 Masse-%, insbesondere mehr als 0,5 Masse-% oder mindestens 0,6 Masse-%, zu kombinieren, wenn sich herausstellt, dass ein Nb-Gehalt von beispielsweise mindestens 0,4 Masse-%, mindestens 0,5 Masse-% oder mindestens 0,6 Masse-% jeweils zu gering ist, um die gewünschten Effekte zu erzielen.

Besonders effektiv lässt sich die günstige Wirkung von Ti und Al bei jeweils optional zugegebenen Gehalten an Ti und/oder AI von bis jeweils höchstens 5 Masse-%, insbesondere bis jeweils höchstens 3,5 Masse-%, nutzen.

Um ihren positiven Einfluss auf die Eigenschaften eines erfindungsgemäß legierten Stahls nutzen zu können, muss die Summe der Gehalte an den Ausscheidungsbildnern Nb, Al und Ti im Stahl der Stahlpartikel eines erfindungsgemäßen Pulvers und damit einhergehend im Stahl eines erfindungsgemäßen Stahlwerkstoffs bzw. eines daraus bestehenden Bauteils mindestens 0,15 Masse-% betragen, wobei diese Summe auch durch Nb alleine gebildet sein kann. Dies bedeutet, dass im Fall, dass von den Ausscheidungsbildnern Nb, AI und Ti nur Niob vorhanden ist, der Nb-Gehalt mindestens 0,15 Masse-% beträgt, wogegen er beispielsweise im Fall, dass Ti und / oder Al in jeweils ausreichenden Gehalten vorhanden sind, auch weniger als 0,15 Masse-% betragen kann. Gehalte an Nb, AI und Ti, die in Summe mindestens 0,25 Masse-%, insbesondere mindestens 0,5 Masse-%, betragen, haben sich in der Praxis als besonders vorteilhaft herausgestellt, wobei hier ebenfalls gilt, dass die Summe der Gehalte an den ausscheidungsbildenden Elementen Nb, AI und Ti auch durch das Pflichtelement Nb alleine gebildet sein kann, Ti und AI also nicht notwendig zusammen mit Nb vorliegen müssen, um die Anforderung an die Summe der Gehalte an Nb sowie an den optional vorhandenen Gehalten an Al und Ti zu erfüllen.

Pflichtgehalte an Nb sowie jeweils optional zusätzlich zugegebene Gehalte an Al und Ti, die in Summe mehr als 10,0 Masse-% betragen, bewirken dagegen keine weitere Härtesteigerung. Besonders effektiv lässt sich die Wirkung der ausscheidungshärtenden Elemente bei Nb-Gehalten und optional zusätzlichen Al- und Ti-Gehalten von in Summe höchstens 7,5 Masse-%, insbesondere von in Summe höchstens 6,0 Masse-%, von in Summe höchstens 5,0 Masse-% oder von in Summe höchstens 3,0 Masse-%, nutzen.

Die optional im erfindungsgemäßen Stahlwerkstoff vorhandenen Gehalte an Kupfer ("Cu") wirken sich ebenfalls auf die Ausscheidungshärtung aus. Zum einen bewirkt Kupfer eine Beschleunigung der Ausscheidungshärtung, da Kupfer als Nukleus für die Ausscheidung von intermetallischen Phasen dient. Zum anderen bewirkt Kupfer bei höheren Gehalten die Ausscheidung einer ε-Cu Phase, woraus eine Härtesteigerung resultiert. Ferner kann Cu im Fall, dass das erfindungsgemäße Pulver zu einem erfindungsgemäßen Stahlwerkstoff gesintert wird, zur Verdichtung des Pulvers und damit einhergehend zur Verbesserung des Ergebnisses des Sinterprozesses beitragen. Ab einem Cu-Gehalt von 0,5 % können diese Wirkungen nachgewiesen werden, wobei Cu-Gehalte von mindestens 0,6 Masse-%, insbesondere mindestens 0,8 Masse-%, besonders wirksam sind. Eine Erhöhung des Cu-Gehaltes auf mehr als 5,0 Masse-% bewirkt jedoch keine Steigerung des positiven Einflusses von Cu, weswegen die Cu-Gehalte auf 5,0 % beschränkt sind. Zudem ist Cu ebenfalls ein austenitstabilisierendes Element, weswegen zu hohe Cu-Gehalte wirksame Restaustenite im Werkstoff nach sich ziehen würden. Um dies sicher zu verhindern, kann der Cu-Gehalt auf maximal 4,0 Masse-%, insbesondere höchstens 3,0 Masse-%, begrenzt werden.

Die optional dem erfindungsgemäßen Pulver zusätzlich zugegebenen und dementsprechend im erfindungsgemäßen Stahlwerkstoff oder einem daraus hergestellten Bauteil zusätzlich in die Stahlmatrix eingebetteten Hartstoffpartikel können aus Karbiden, Nitriden, Karbonitriden, Boriden oder Oxiden mindestens eines der Elemente Ti, Cr, W, Mo, Nb, V, Si, Hf, Al, Ta oder Zr bestehen, wobei sich insbesondere Hartstoffpartikel, die aus TiC bestehen, für die erfindungsgemäßen Zwecke bewährt haben. Generell können die eingesetzten Hartphasen abhängig vom Belastungskollektiv, das im Gebrauch auf das jeweils aus erfindungsgemäßem Stahlwerkstoff bestehenden Bauteil wirkt, aus der Gesamtheit der verfügbaren Hartstoffe ausgewählt werden. Eine Kombination verschiedener Hartphasentypen ist ebenfalls möglich und kann technisch sinnvoll sein, da unterschiedliche Eigenschaftsprofile abgebildet werden können. Zum Beispiel können TiC- oder WC-Partikel, die einen hohen Abrasionswiderstand gewährleisten, mit Partikeln auf Oxidbasis kombiniert werden, um die Wärmeleitfähigkeit oder die thermische Stabilität des Werkstoffs einzustellen.

Die Stahlpartikel und die optional vorhandenen Hartstoffpartikel eines erfindungsgemäßen Pulvers oder die optional zusätzlich in der Stahlmatrix eingebetteten Hartstoffpartikel weisen typischerweise eine Korngröße von bis zu 250 µm auf. Korngrößen von bis zu 200 µm sind typischerweise für das EBM-Verfahren ("EBM" = Electron Beam Melting), Korngrößen von bis zu 150 µm für das LMD-Verfahren ("LMD" = Laser Metal Deposition) und Korngrößen von bis zu 100 µm für das SLM-Verfahren ("SLM" = Selective Laser Melting) geeignet. In der Praxis haben sich Partikelgrößen von mindestens 5 µm, insbesondere mindestens 10 µm, besonders bewährt. Pulver, deren Partikel mindestens diese Größe aufweisen, gelten als im technischen Sinne "staubfrei".

Die Härte eines erfindungsgemäßen Stahlwerkstoffs beträgt im Fall, dass in ihm keine zusätzlichen zugegebenen Hartstoffpartikel vorhanden sind, im ausscheidungsgehärteten Zustand mindestens 40 HRC, insbesondere mindestens 45 HRC.

Durch die optionale Zugabe eines Hartstoffanteils zum erfindungsgemäßen Pulver kann die Härte eines daraus erzeugten Stahlwerkstoffs bzw. eines daraus bestehenden Bauteils gesteigert werden.

Der optional vorgesehene Anteil an zusätzlich zugegebenen Hartstoffpartikeln am Volumen eines erfindungsgemäßen Pulvers und damit einhergehend am Volumen eines erfindungsgemäßen Stahlwerkstoffs oder eines daraus bestehenden Bauteils beträgt 5 Vol.-% bis 50 Vol.-%.

Bei einem Hartstoffanteil von weniger als 5 Vol.-% würde die angestrebte Härtesteigerung nicht zuverlässig eintreten.

Bei einem Hartstoffanteil von mehr als 50 Vol.-% würde der Stahlwerkstoff zu spröde werden.

Über den Volumenanteil, den die erfindungsgemäß zusätzlich zu den sich aus dem Stahl bildenden Hartstoffausscheidungen Hartstoffe am erfindungsgemäßen Pulver bzw. am erfindungsgemäßen Stahlwerkstoff einnehmen, kann die Härte des aus erfindungsgemäßem Pulver erzeugten erfindungsgemäßen Stahlwerkstoffs gesteuert werden. Hier hat sich gezeigt, dass
- bei einem Gehalt an zusätzlich zugegebenen Hartstoffpartikeln von mindestens 5 Vol.-% und höchstens 15 Vol.-% die Gesamthärte des Stahlwerkstoffs im ausscheidungsgehärteten Zustand mindestens 50 HRC beträgt,
- bei einem Gehalt an zusätzlich zugegebenen Hartstoffpartikeln von mindestens mehr als 15 Vol.-% und höchstens 35 Vol.-% die Gesamthärte des Stahlwerkstoffs im ausscheidungsgehärteten Zustand mindestens 55 HRC beträgt, und
- bei einem Gehalt an zusätzlich zugegebenen Hartstoffpartikeln von mindestens mehr als 35 Vol.-% und höchstens 50 Vol.-% die Gesamthärte des Stahlwerkstoffs im ausscheidungsgehärteten Zustand mindestens 60 HRC beträgt.

Aus einem erfindungsgemäß zusammengesetzten Pulver lassen sich Bauteile, die aus einem erfindungsgemäßen Stahlwerkstoff bestehen und eine Gesamthärte von mindestens 45 HRC aufweisen, erzeugen, indem folgende Arbeitsschritte durchlaufen werden:
a) Bereitstellen eines den voranstehenden Erläuterungen entsprechend erfindungsgemäß zusammengesetzten Pulvers;
b) Erzeugen eines Halbzeugs aus dem bereitgestellten Pulver durch Anwendung eines pulvermetallurgischen oder additiven Verfahrens;
c) optional: Lösungsglühen des Halbzeugs über eine Dauer von 0,5 - 10 h bei einer 750 - 1250 °C betragenden Lösungsglühtemperatur und anschließendes Abkühlen des Halbzeugs mit einer Abkühlgeschwindigkeit von mindestens 10 K/min auf weniger als 100 °C;
d) Formen des Bauteils aus dem Halbzeug;
e) Ausscheidungshärten des Bauteils, indem das Bauteil mit einer Erwärmungsgeschwindigkeit von mindestens 0,1 K/min auf eine 300 - 700 °C betragende Ausscheidungstemperatur erwärmt wird, auf der es über eine Haltedauer von mindestens 0,25 Stunden gehalten wird, um nach Ablauf der Haltedauer mit einer Abkühlgeschwindigkeit von mindestens 10 K/min auf Raumtemperatur abgekühlt zu werden.

Im Arbeitsschritt a) wird ein Pulver bereitgestellt, das in der voranstehend erläuterten erfindungsgemäßen Weise beschaffen ist. Die Erzeugung des Pulvers kann in jeder der bekannten, oben bereits erwähnten Weisen erfolgen.

Im Arbeitsschritt b) wird aus dem erfindungsgemäßen Pulver ein Halbzeug erzeugt. Hierzu kann jedes Verfahren eingesetzt werden, mit dem sich aus einem Pulver auf Stahlbasis ein fester Körper formen lässt. Insbesondere eignet sich das erfindungsgemäße Pulver für die Verarbeitung in einem HeißIsostatischen-Pressverfahren (s. https://www.giessereilexikon.com/giessereilexikon/Encyclopedia/show/heiss-isostatisches-pressen-889/?cHash=80f51d4cdec9192712005c2b0ad453b7, Auffindedatum 14. Mai 2020), durch Sintern oder eines der oben erläuterten, aus dem Stand der Technik bekannten additiven Fertigungsverfahren, wobei letzteres insbesondere für solche erfindungsgemäßen Pulver gilt, denen keine Hartstoffe zugemischt sind.

Praktische Erprobungen haben gezeigt, dass sich erfindungsgemäß erzeugte und beschaffene Halbzeuge durch beispielsweise eine spanende Bearbeitung zu einem Bauteil formen lassen, ohne dass es dazu einer zwischengeschalteten Wärmebehandlung bedarf. Auch hat sich gezeigt, dass ein aus einem erfindungsgemäßen Pulver mittels eines additiven Fertigungsverfahrens erzeugtes Bauteil bereits optimierte Eigenschaften erreicht, wenn es ohne zwischengeschaltete weitere Wärmebehandlung unmittelbar ausgelagert wird.

Jedoch kann das im Arbeitsschritt d) erfolgende Formen des Halbzeugs zu dem Bauteil dadurch vereinfacht werden, dass das erfindungsgemäß erzeugte Halbzeug vor dem Arbeitsschritt d) optional ein. Lösungsglühen durchläuft. Bei diesem optionalen Lösungsglühen wird das Halbzeug über eine Dauer von 0,5 h bis 10 h bei einer 800 °C bis 1250 °C betragenden Lösungsglühtemperatur geglüht, wobei sich Lösungsglühtemperaturen von mindestens 850 °C, vorzugsweise von höchstens 1100 °C besonders bewährt haben. Die Dauer der Lösungsglühung wird jeweils so angepasst, dass neben der Stahlmatrix vorliegende Phasen aufgelöst werden, also die in diesen Phasen gebundenen Elemente in der Stahlmatrix in Lösung gehen. Indem das Halbzeug anschließend mit einer Abkühlrate von mindestens 10 K/min abgeschreckt wird, wird verhindert, dass sich erneut Ausscheidungen dieser Art bilden. Die Lösungsglühtemperatur und Lösungsglühdauer wird in der dem Fachmann bekannten Weise in Abhängigkeit von der jeweils vorliegenden Legierung des Stahls und dem geforderten Maß des Lösungszustandes unter Berücksichtigung der Abhängigkeit zwischen Temperatur und Dauer definiert, welche die diffusionsgetriebene Ausscheidungsbildung beeinflussen.

Nach Ablauf der Glühdauer wird das Halbzeug mit einer Abkühlgeschwindigkeit von mindestens 10 K/min, insbesondere mindestens 20 K/min oder mindestens 30 K/min, auf eine unterhalb von 100 °C liegende Temperatur gekühlt. Werden besondere Anforderungen an die Oberflächenbeschaffenheit des Halbzeugs gestellt, kann die Lösungsglühung unter einem gegenüber dem Stahl des Halbzeugs inerten Schutzgas oder im Vakuum erfolgen, um einer Oxidation der Oberfläche des Halbzeugs entgegenzuwirken. Als Abschreckmedium bei der Abkühlung kann in konventioneller Weise ein Luftstrahl, ein Strahl eines inerten Gases oder Öl oder ein Polymer verwendet werden.

Wie oben bereits erläutert, weist das gegebenenfalls lösungsgeglühte Halbzeug, wenn es zum Arbeitsschritt d) des erfindungsgemäßen Verfahrens gelangt, eine Härte auf, bei der es in konventioneller Weise beispielsweise spanabhebend oder umformend in die Form des herzustellenden Bauteils gebracht werden kann.

Erst das so im Arbeitsschritt d) geformte Bauteil wird dann im Arbeitsschritt e) durch eine Auslagerung ausscheidungsgehärtet. Hierzu wird es bei einer Ausscheidungstemperatur von 300 - 700 °C, insbesondere höchstens 600 °C, über eine Dauer von mindestens 0,25 Stunden geglüht. Insbesondere beträgt dabei die Ausscheidungstemperatur mindestens 400 °C, um die Ausscheidungsbildung im gewünschten Umfang innerhalb einer optimierten Zeitdauer zu bewirken.

Nachfolgend wird die Erfindung anhand von Ausführungsbeispielen näher erläutert.

Es sind vier erfindungsgemäße Stahlschmelzen S1 bis S4 mit den in Tabelle 1 angegebenen Zusammensetzungen erschmolzen worden.

Um das Potenzial der Stähle für eine Ausscheidungshärtung zu untersuchen, sind die Stahlschmelzen S1 bis S4 zu Probestücken vergossen worden. Diese Probestücke sind einer Lösungsglühung unterzogen worden, bei der sie mit einer Erwärmungsgeschwindigkeit von 10 K/min auf eine Lösungsglühtemperatur T_L erwärmt worden sind. Auf dieser Lösungsglühtemperatur T_L sind die Proben über eine Lösungsglühdauer t_L gehalten worden, bevor sie ausgehend von der Lösungsglühtemperatur T_L über eine Dauer von 3 min auf Raumtemperatur abgekühlt worden sind. Anschließend ist an den Proben die Härte HM_L im lösungsgeglühten Zustand ermittelt worden.

Die lösungsgeglühten Proben sind dann mit einer Erwärmungsgeschwindigkeit von 10 K/min auf eine Ausscheidungsglühtemperatur T_A erwärmt worden, bei der sie über eine Ausscheidungsglühdauer t_A gehalten worden sind, bevor sie wiederum mit einer Abkühlgeschwindigkeit von 10 K/min auf Raumtemperatur abgekühlt worden sind. An den so erhaltenen Proben ist die Härte HM_A im lösungsgeglühten Zustand ermittelt worden.

Die jeweilige Lösungsglühtemperatur T_L, Lösungsglühdauer t_L, Härte HM_L, Ausscheidungsglühtemperatur T_A, Ausscheidungsglühdauer t_A und Härte HM_A sind in Tabelle 2 angegeben.

Es zeigt sich, dass bei den erfindungsgemäßen Schmelzen S1 bis S4 im lösungsgeglühten Zustand optimal weiches und damit gut zu einem Bauteil formbares Stahlmaterial vorliegt, bei dem sich durch die Ausscheidungshärtung eine optimale Erhöhung der Härte erzielen lässt. Dabei werden hohe Härten bereits bei Anwesenheit von Nb alleine erreicht (Stähle S1,S2). Diese kann durch die kombinierte Anwesenheit von Nb, AI und Ti weiter gesteigert werden (Stähle S3,S4).

Aus einer gleich der Legierung des Stahls S2 zusammengesetzten Schmelze sind in bekannter Weise durch Verdüsen, Sieben und Windsichten Stahlpartikel mit einem maximalen Korndurchmesser von 100 µm erzeugt worden.

Die Stahlpartikel sind mit TiC-Partikeln, deren maximaler Korndurchmesser ebenfalls 100 µm betrug, zu Pulvern P1 - P6 vermischt worden, wobei der Volumenanteil AHP der Hartstoffpartikel am Gesamtvolumen des jeweiligen Pulvers P1 - P6 von Pulver zu Pulver in der in Tabelle 3 angegebenen Weise variiert worden ist.

Aus den Pulvern P1 - P6 sind in konventioneller Weise durch heißisostatisches Pressen Probehalbzeuge erzeugt worden. Diese sind jeweils mit einer Erwärmungsgeschwindigkeit von 10 K/min auf eine Lösungsglühtemperatur von 850 °C erwärmt worden, bei der sie für 5 Stunden gehalten worden sind, um dann innerhalb von 20 min auf Raumtemperatur abgekühlt zu werden. Anschließend sind die Halbzeuge einem Ausscheidüngsglühen unterzogen worden, bei dem sie mit 10 K/min auf eine Glühtemperatur von 480 °C erwärmt, bei dieser Glühtemperatur über 5 Stunden gehalten und schließlich mit 10 K/min auf Raumtemperatur abgekühlt worden sind.

In Tabelle 3 ist zu jeder Probe die nach dem Ausscheidungshärten ermittelte Härte H_A angegeben. Es zeigt sich, dass die auf diese Weise aus den Pulvern P1 und P2 erzeugten Stahlwerkstoffe aufgrund ihres zu geringen Hartstoffpartikel-Volumenanteils Härtewerte H_A von weniger als 60 HRC erreichen, während die Proben P3 - P6 mit zunehmenden Hartstoffanteil höhere Härten H_A entwickeln.

In einem weiteren Versuch sind aus einem Stahl S5, dessen Zusammensetzung in Tabelle 4 angegeben ist, in bekannter Weise ebenfalls durch Verdüsen, Sieben und Windsichten Stahlpartikel mit einem maximalen Korndurchmesser von 100 µm erzeugt worden.

Die Stahlpartikel sind mit TiC-Partikeln, deren maximaler Korndurchmesser ebenfalls 100 µm betrug, zu einem Pulver MMC vermischt worden, dessen Gehalt an Stahlpartikeln 70 Vol.-% und dessen Gehalt an TiC-Partikeln 30 Vol.-% betrug.

Aus dem Pulver MMC ist in konventioneller Weise durch heißisostatisches Pressen ein Probehalbzeug erzeugt worden. Dieses ist jeweils mit einer Erwärmungsgeschwindigkeit von 10 K/min auf eine Lösungsglühtemperatur T_Lvon 850 °C erwärmt worden, bei der es über eine Lösungsglühdauer t_L von 5 Stunden gehalten worden ist, um dann innerhalb von 20 min auf Raumtemperatur abgekühlt zu werden. Anschließend ist das Halbzeug einem Ausscheidungsglühen unterzogen worden, bei dem es mit 10 K/min auf eine Ausscheidungsglühtemperatur T_A von 480 °C erwärmt, bei dieser Ausscheidungsglühtemperatur T_A über eine Ausscheidungsglühdauer t_A von 8 Stunden gehalten und schließlich mit 10 K/min auf Raumtemperatur abgekühlt worden ist. Die jeweilige Lösungsglühtemperatur T_L, Lösungsglühdauer t_L, die nach dem Lösungsglühen vorliegende Härte HM_L, Ausscheidungsglühtemperatur T_A, Ausscheidungsglühdauer t_A und die nach dem Ausscheidungsglühen vorliegende Härte HM_A der Probe sind in Tabelle 5 angegeben.

Es zeigt sich auch hier, dass bei dem aus dem im Ausgangszustand pulverförmig vorliegenden Pulver MMC durch die kombinierte Anwesenheit von Nb, Al und Ti im Stahl der Stahlpartikel, die beim aus dem Pulver MMC erzeugten Halbzeug die Stahlmatrix bilden, in die die zusätzlich beigegebenen TiC-Hartstoffpartikel eingebettet sind, sowie durch die Zugabe einer ausreichenden Menge an TiC-Partikeln ein Halbzeug erzeugt werden kann, das, wie die voranstehend erläuterten Beispiele, nach dem Lösungsglühen eine Härte aufweist, bei der eine optimale Bearbeitbarkeit gewährleistet ist, und dessen Härte durch ein Ausscheidungsglühen so gesteigert werden kann, dass eine optimierte Verschleißbeständigkeit und Belastbarkeit gewährleistet ist.

**Tabelle 1, alle Angaben in Masse-%, Rest Eisen und unvermeidbare Verunreinigungen**

| Stahl | C | Si | Mn | Ni | Mo | Co | Ti | Al | Nb |
|---|---|---|---|---|---|---|---|---|---|
| S1 | 0,01 | 0,34 | 0,37 | 16,9 | 4,7 | 13,6 | - | - | 0,45 |
| S2 | 0,01 | 0,45 | 0,19 | 17,0 | 5,0 | 12,8 | - | - | 1,1 |
| S3 | 0,01 | 0,43 | 0,18 | 16,9 | 4,8 | 12,50 | 0,78 | 0,8 | 1,1 |
| S4 | 0,01 | 0,43 | 0,18 | 16,4 | 4,7 | 12,2 | 1,3 | 1,6 | 1,1 |

**Tabelle 2**

| Stahl | T_L | t_L | HM_L | T_A | t_A | HM_A |
|---|---|---|---|---|---|---|
| | [°C] | [h] | [HRC] | [°C] | [h] | [HRC] |
| S1 | 850 | 5 | 32,7 ± 0,8 | 480 | 8 | 52,5 ± 0,5 |
| S2 | 850 | 5 | 37,2 ± 0,4 | 480 | 8 | 54,5 ± 0,7 |
| S3 | 850 | 5 | 38,0 ± 0,5 | 480 | 8 | 61,5 ± 0,3 |
| S4 | 850 | 5 | 40,5 ± 0,6 | 480 | 8 | 62,4 ± 0,6 |

**Tabelle 3**

| Pulver | AHP | H_A |
|---|---|---|
| | [Vol.-%] | [HRC] |
| P1 | 0 | 56 |
| P2 | 3,5 | 59 |
| P3 | 5 | 60 |
| P4 | 10 | 63 |
| P5 | 15 | 64 |
| P6 | 25 | 68 |

**Tabelle 4, alle Angaben in Masse-%, Rest Eisen und unvermeidbare Verunreinigungen**

| Stahl | C | Ni | Mo | Co | Ti | AI | Nb |
|---|---|---|---|---|---|---|---|
| S5 | <0,01 | 20,0 | 8,0 | - | 2,0 | 3,0 | 0,05 |

**Tabelle 5**

| Pulver | T_L | t_L | HM_L | T_A | t_A | HM_A |
|---|---|---|---|---|---|---|
| | [°C] | [h] | [HRC] | [°C] | [h] | [HRC] |
| MMC | 850 | 5 | 56,0 ± 0,5 | 480 | 8 | 66,5 ± 0,5 |

## Patentansprüche

1. Pulver für die Verwendung in einem pulvermetallurgischen oder einem additiven Verfahren, wobei das Pulver
- aus Stahlpartikeln eines Stahls, der, in Masse-%, aus
| | | | | |
|---|---|---|---|---|
| | C: | | < | 0,5 %, |
| | Si: | | < | 2,0 %, |
| | Mn: | | < | 2,0 %, |
| | Cr: | | < | 1,0 %, |
| | Mo: | 0,25 | - | 12 %, |
| | Ni: | 8 | - | 30 %, |
| optional | Co: | 8 | - | 18 %, |
| optional | Cu: | 0,5 | - | 5,0 %, |
| | Nb: | 0,05 | - | 5,0 %, |
| optional | Al: | | ≤ | 9,75 %, |
| optional | Ti: | | ≤ | 9,75 %, |
mit der Maßgabe, dass die Summe der Gehalte an Nb und, soweit vorhanden, an Al und Ti 0,15 % bis 10 % beträgt, und als Rest aus Eisen und unvermeidbaren Verunreinigungen zusammengesetzt ist, zu denen < 0,05 % P, < 0,05 % S, < 0,1 % N, < 0,05 % B und < 0,5 % O sowie im Fall, dass Co nicht in Gehalten von mindestens 8 % vorhanden ist, < 0,5 % Co und im Fall, dass Cu nicht in Gehalten von mindestens 0,5 % vorhanden ist, < 0,5 % Cu zählen, sowie optional zusätzlich aus Partikeln mindestens eines als Karbid, Nitrid, Carbonitrid, Borid oder Oxid vorliegenden Hartstoffs gebildet ist, die mit den Stahlpartikeln vermischt sind und 5 - 50 Vol.-% am Gesamtvolumen des Pulvers einnehmen.

2. Pulver nach Anspruch **1, dadurch gekennzeichnet, dass** der Stahl der Stahlpartikel in Summe mindestens 1,5 Masse-% Nb und, soweit vorhanden, AI und/oder Ti enthält.

3. Pulver nach einem der voranstehenden Ansprüche, **dadurch gekennzeichnet, dass** der Gehalt des Stahls der Stahlpartikel an Nb und, soweit vorhanden, an Al und/oder an Ti, jeweils mindestens 0,1 Masse-% beträgt.

4. Pulver nach einem der voranstehenden Ansprüche, **dadurch gekennzeichnet, dass** der Gehalt des Stahls der Stahlpartikel an Nb und, soweit vorhanden, an Al und/oder an Ti jeweils höchstens 5,0 Masse-% beträgt.

5. Pulver nach einem der voranstehenden Ansprüche, **dadurch gekennzeichnet, dass** die Summe der Gehalte des Stahls der Stahlpartikel an Nb, AI und/oder Ti höchstens 7,5 Masse-% beträgt.

6. Pulver nach einem der voranstehenden Ansprüche, **dadurch gekennzeichnet, dass** das Pulver frei von Hartstoffen, die eine Bindung mit Mo eingehen, ist und der Mo-Gehalt des Stahls der Stahlpartikel des Pulvers 4 - 6 Masse-% beträgt.

7. Pulver nach einem der Ansprüche 1 - 5, **dadurch gekennzeichnet, dass** das Pulver Hartstoffpartikel enthält, die mit Mo eine Bindung eingehen, und **dass** der Mo-Gehalt des Stahls der Stahlpartikel des Pulvers mindestens 6 Masse-% beträgt.

8. Pulver nach einem der voranstehenden Ansprüche, **dadurch gekennzeichnet, dass** der Ni-Gehalt des Stahls der Stahlpartikel 16 - 20 Masse-% beträgt.

9. Pulver nach einem der voranstehenden Ansprüche, **dadurch gekennzeichnet, dass** die optional zusätzlich zugegebenen Hartstoffpartikel des Pulvers aus Karbiden, Nitriden, Karbonitriden, Boriden oder Oxiden mindestens eines der Elemente Ti, Cr, W, Mo, Nb, V, Si, Hf, AI, Ta oder Zr bestehen.

10. Pulver nach einem der voranstehenden Ansprüche, **dadurch gekennzeichnet, dass** Stahlpartikel und die optional vorhandenen Hartstoffpartikel des Pulvers oder die optional in die Stahlmatrix eingebetteten Hartstoffpartikel eine Korngröße von höchstens 250 µm aufweisen.

11. Stahlwerkstoff, hergestellt aus einem gemäß einem der voranstehenden Ansprüche beschaffenen Pulvers, wobei optional in den Stahl als Karbide, Nitride, Carbonitride, Boride oder Oxide vorliegende Hartstoffpartikel eingebettet sind, wobei der Anteil der optional vorhandenen zusätzlich zugegebenen Hartstoffpartikel am Gesamtvolumen des Stahlwerkstoffs 5 - 50 Vol.-% beträgt.

12. Stahlwerkstoff nach Anspruch 11, **dadurch gekennzeichnet,** d a s s die Härte des Stahlwerkstoffs im ausscheidungsgehärteten Zustand mindestens 40 HRC beträgt.

13. Stahlwerkstoff nach Anspruch 11 oder 12, **dadurch gekennzeichnet, dass** der Gehalt an den optional zusätzlich in der Stahlmatrix eingebetteten Hartstoffpartikeln höchstens 15 Vol.-%, mehr als 15 Vol.-% und höchstens 35 Vol.-% oder mehr als 35 Vol.-% und höchstens 50 Vol.-% beträgt.

14. Stahlwerkstoff nach Anspruch 13, **dadurch gekennzeichnet, dass** die Härte des Stahlwerkstoffs im ausscheidungsgehärteten Zustand mindestens 50 HRC beträgt.

15. Verfahren zur Herstellung eines Bauteils, umfassend folgende Arbeitsschritte:
a) Bereitstellen eines Pulvers, das aus Stahlpartikeln eines Stahls, der, in Masse-%,
| | | | | |
|---|---|---|---|---|
| | C: | | < | 0,5 %, |
| | Si: | | < | 2,0 %, |
| | Mn: | | < | 2,0 %, |
| | Cr: | | < | 1,0 %, |
| | Mo: | 0,25 | - | 12 %, |
| | Ni: | 8 | - | 30 %, |
| optional | Co: | 8 | - | 18 %, |
| optional | Cu: | 0,5 | - | 5,0% |
| | Nb: | 0,05 | - | 5,0 %, |
| optional | Al: | | ≤ | 9,75 %, |
| optional | Ti: | | ≤ | 9,75 %, |
mit der Maßgabe, dass die Summe der Gehalte an Nb und, soweit vorhanden, an Al und Ti 0,15 - 10 % beträgt, und als Rest aus Eisen und unvermeidbaren Verunreinigungen besteht, zu denen < 0,05 % P, < 0,05 % S, < 0,1 % N, < 0,05 % B und < 0,1 % O sowie im Fall, dass Co nicht in Gehalten von mindestens 8 % vorhanden ist, < 0,5 % Co und im Fall, dass Cu nicht in Gehalten von mindestens 0,5 % vorhanden ist, < 0,5 % Cu zählen;
b) Erzeugen eines Halbzeugs aus dem bereitgestellten Pulver durch Anwendung eines pulvermetallurgischen oder additiven Verfahrens;
c) optional: Lösungsglühen des Halbzeugs über eine Dauer von 0,5 - 10 h bei einer 750 - 1250 °C betragenden Lösungsglühtemperatur und anschließendes Abkühlen des Halbzeugs mit einer Abkühlgeschwindigkeit von mindestens 10 K/min auf weniger als 100 °C;
d) Formen des Bauteils aus dem Halbzeug;
e) Ausscheidungshärten des Bauteils, indem das Bauteil mit einer Erwärmungsgeschwindigkeit von mindestens 0,1 K/min auf eine 300 °C bis 700 °C betragende Ausscheidungstemperatur erwärmt wird, auf der es über eine Haltedauer von mindestens 0,25 Stunden gehalten wird, um nach Ablauf der Haltedauer mit einer Abkühlgeschwindigkeit von mindestens 10 K/min auf Raumtemperatur abgekühlt zu werden.
